Europäisches Patentamt

(19) European Patent Office

Office européen des brevets

(11) **EP 0 749 362 B1**

(12) **EUROPEAN PATENT SPECIFICATION**

(45) Date of publication and mention
of the grant of the patent:
**20.10.1999 Bulletin 1999/42**

(21) Application number: **94910374.1**

(22) Date of filing: **07.03.1994**

(51) Int. Cl.$^6$: **B07C 3/14**

(86) International application number:
**PCT/EP94/00667**

(87) International publication number:
**WO 95/24278 (14.09.1995 Gazette 1995/39)**

(54) **IMPROVEMENTS IN IMAGE PROCESSING**

VERBESSERUNG IN BILDVERARBEITUNG

AMELIORATIONS RELATIVES AU TRAITEMENT DES IMAGES

(84) Designated Contracting States:
**DE FR GB**

(43) Date of publication of application:
**27.12.1996 Bulletin 1996/52**

(73) Proprietor:
**International Business Machines
Corporation
Armonk, N.Y. 10504 (US)**

(72) Inventors:
• **ZLOTNICK, Aviad
D.N. Lower Galil (IL)**
• **SOMMER, Ziva
32697 Haifa (IL)**

(74) Representative: **Boyce, Conor
IBM United Kingdom Limited,
Intellectual Property Law,
Hursley Park
Winchester, Hampshire SO21 2JN (GB)**

(56) References cited:
**DE-A- 3 942 932**

• **9TH INTERNATIONAL CONFERENCE ON
PATTERN RECOGNITION, vol.1, 14 November
1988, ROME, IT pages 27 - 31, XP000042756
DOWNTON ET AL 'Pre-processing of envelope
images for optical character recognition'**

Note: Within nine months from the publication of the mention of the grant of the European patent, any person may give
notice to the European Patent Office of opposition to the European patent granted. Notice of opposition shall be filed in
a written reasoned statement. It shall not be deemed to have been filed until the opposition fee has been paid. (Art.
99(1) European Patent Convention).

EP 0 749 362 B1

## Description

### Technical Field

The invention relates to computerised mail sorting and, more particularly, to an image processing method and apparatus for identifying and locating labels on digitized images of parcels.

### Background Art

With the ever increasing volume of parcel mail, automating parcel sorting is becoming of vital importance to post offices around the world and to the transportation industry in general.

Generally, in order to automate parcel sorting, it is necessary to capture a digital image of the parcel and extract from the image routing information, such as the destination address. This routing information may then be used by appropriate apparatus to sort the parcel appropriately or to generate e.g. a bar code to be printed on the parcel for subsequent use in the sorting process.

However, the label may be located anywhere on the parcel and thus anywhere in the digital image of the parcel. Generally optical character reader (OCR) technology will be used to extract the routing information from a reasonably high resolution image of the label. In order to efficiently make use of this technology and avoid the processing of the whole of the image of the parcel, it is necessary to locate the label on the image of the parcel. Once this has been achieved it is only necessary to process the portion of the image corresponding to the label.

DE-A-3942932 proposes a system in which sorting information is detected automatically in a parcel image generated using a rough scanning operation, by examining images for regions which cooincide in a selection of image features with the model of an address sticker or an address region on a package. It is suggested that features of this type might include colour contrast or grey value contrast.

### Disclosure of the Invention

The object of the invention is the provision of an image processing apparatus for locating an address label in an image of a parcel.

Two kinds of problems must be solved to perform such label detection. First, achieving the required speed is very difficult. The image processing must be performed in real time with currently available technology. Second, the image data is not ideal: the label may be contaminated by noise, the label may be somewhat transparent and therefore corrupted by the parcel background, and text may appear both on the label and on the parcel itself. Moreover, the label may appear anywhere on the parcel.

To solve the above problems the invention enables image processing apparatus to be provided for locating labels on images of parcels comprising: means to generate and store in digital form an image of the parcel, the image comprising pixels arranged in rows and columns; classification logic for classifying each pixel as either a label pixel, a background pixel or neither, based on the pixel colour; segmentation logic for reclassifying each pixel as either label or background based on its original classification and the classification of pixels in its neighbourhood; and means for identifying label regions in the image from the reclassification of the pixels.

The invention is based upon the observations made by the inventors that almost all parcels have white labels with black text and that no parcels are as white as their labels. Therefore, colour information may be used to separate the label from the background.

The pixels are initially classified as either being in the label, the background or neither. Typically the pixels classified as neither background nor label pixels will correspond to text on the label or the body of the parcel or be due to noise. A segmentation technique is then used to re-classify the pixels as either label or background pixels on the basis of their context. The segmentation technique can, for example, employ known features of the text, for example the fact that pixels corresponding to text will not form long runs either horizontally or vertically in the image. In addition the segmentation logic can make use of the fact that label pixels can be expected to occur in relatively long runs and that the occurrence of background pixels in the label is quite rare.

In one embodiment, the classification logic is arranged to classify white pixels as label pixels, black pixels as neither label pixels nor background pixels and all other pixels as background pixels. However there are other possibilities. For example schemes could be devised which employ labels of a particular predefined colour. In this case, the apparatus would be adapted to identify and locate labels of that particular colour from the parcel images. Furthermore, the possibility that pixels of more than one colour all be classified as label pixels is not excluded.

The invention also provides apparatus for extracting routing information from parcels for subsequent use in sorting the parcels, comprising a camera for capturing parcel images; means to transport parcels past the camera; the above described image processing apparatus for receiving a signal from the camera; means to generate images of par-

2

cel labels using the locations of the regions in which all pixels are classified as label pixels; and means to extract routing information from the images of the labels.

Viewed from another aspect the invention provides an image processing method for locating labels on images of parcels comprising:

(a) generating and storing in digital form an image of the parcel comprising pixels arranged in rows and columns;
(b) classifying each pixel as either a label pixel, a background pixel or neither, based on the pixel colour;
(c) reclassifying each pixel as either label or background based on its original classification and the classification of pixels in its neighbourhood; and
(d) identifying label regions in the image based on the reclassification of the pixels.

Also provided is a method for parcel sorting including the above steps.

Brief Description of Drawings

An embodiment of the invention will now be described with reference to the accompanying drawings wherein:

Figure 1 is an overall view of a shipping label translation systen;
Figure 2 is a schematic diagram showing image processing apparatus;
Figures 3 a, b and c are illustrative of low resolution parcel images.

Best Mode For Carrying Out The Invention

The invention is embodied in a Shipping Label Translation System which extracts shipping information from labels on parcels using image capture, image processing and optical character recognition (OCR) technologies.

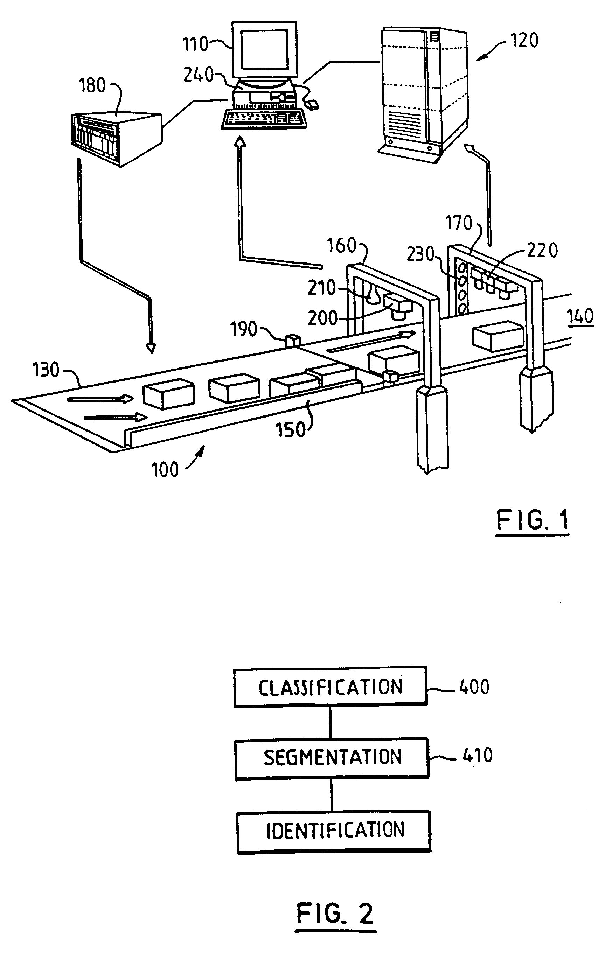

The system is illustrated in Figure 1 and comprises the following major components:

(a) Conveyor system 100, with low and high resolution image capture stations 160 and 170 respectively;
(b) Computer 110 operating under the control of a suitable program providing a user interface, overall system control and image processing functions;
(c) OCR Subsystem 120;
(d) Programmable logic controller 180 which enables the computer 110 to control the functioning of the conveyor and the image capture cameras.

Conventional components are used for the mechanical and image capture functions of the conveyor. Whilst modifications are required to handle the labels, the fundamental OCR building blocks, both hardware and software, are also conventional. Computer 110 could, for example, be one of the IBM RISC SYSTEM/6000 family of computers (IBM and RISC SYSTEM/6000 are trade marks of International Business Machines Corporation).

The data flow and major components shown in Figure 1 are explained in the following sections through descriptions of the processing of packages.

The conveyor system 100 for the Shipping Label Translation System consists of two separate conveyor modules; an induction conveyor 130 and a process conveyor 140.

The induction conveyor 130 loads packages into the system. Packages are "skewed" to one side of the conveyor along an aligning edge 150 as they travel down the belt. This provides a constant location for the packages as they travel through the system. The "skewing" of packages to one side of the conveyor can be accomplished by providing an angled belt conveyor in the horizontal plane, or by providing a decline belt conveyor, in which packages will be transferred to the one side of the conveyor by gravity. The angled horizontal belt is illustrated in Figure 1.

The process conveyor 140 is a continuous running belt conveyor that carries the packages through the two image capture stations 160 and 170.

Conveyor speed control is provided by the Programmable Logic Controller (PLC) 180. The PLC 180 is connected to and operates under the control of the computer 110. The control system design provides the means to select conveyor speeds through options provided by a control program executing on computer 110.

It will be understood that different modes of system operation, such as maintenance, test, etc., require configurable conveyor speeds. The controller 180 also monitors a series of photoeyes to track packages through the system and also provide package "jam" detection. The Gap Photoeye 190 shown in Figure 1 provides feedback for the gap between packages and act as the gate between conveyor modules.

The operator places parcels on the conveyor 100 one by one with the labels face up. The operator is not required to rotate the parcel so that the label is in a fixed orientation.

Control over the gap between packages is provided to allow time to adjust focus of the high resolution cameras for packages of different heights and the package feed rate to be matched to the image processing capacity of the system.

To provide this gap, a stop/start conveyor section 130 is used at the package loading point. Packages are released from conveyor to a constant speed conveyor 140 under control of suitable software in the computer 110, which monitors the conveyor sensors through Programmable Logic Controller 180.

The gap mechanism can be used to temporarily stop feeding packages if a delay is required, e.g. for handling rejects. This mechanism could be eliminated at the expense of reduced throughput by having the operators place packages farther apart.

The package passes through a stage in which a standard TV camera 200 mounted at a fixed height over the conveyor belt captures a colour image of the top of the package.

Illumination is provided through a strobe light 210 to eliminate blur from package movement. The camera lens has sufficient depth of field to handle the range of package sizes required and therefore does not require focus control.

The TV camera is connected to a video capture board of known type in the computer 110 and stored in digital form in a storage device in the computer. Suitable software in the computer 110 analyzes the digital form of the low resolution image to perform the following functions:

(a) Determining package dimensions and orientation on the belt.
(b) Label detection.
(c) Locating an open area on the package for later application of a label.

It is possible to use a number of techniques to determine the package height from the TV image itself. For example, the length of a package along the belt path can be measured by a simple photosensor and contrasted with the length of the package in pixels in the TV image: the package appears longer in the TV image if its top surface is closer to the camera. Alternatively, the package height could be determined via discrete sensors, for example, a photocell array looking across the belt, or sonic sensors mounted overhead on the frame containing the TV camera, or the like.

The package boundaries can be readily determined within the TV image by detecting the colour shift from the package to the belt. Top surface dimensions and orientation can then be determined. The package height information is used in conjunction with the top view dimensions to compute the smallest bounding box that can surround the parcel.

The information needed for parcel routing is contained in the labels of the parcels. In order to facilitate easy access to this information, computer 110 is programmed to extract the location of the label from the low resolution images of the parcels.

Labels are located in the low resolution images of the parcels through analysis of their colour differences compared to the parcel background. In this embodiment, the location and orientation information is used to define the areas for which high resolution images are captured downstream.

In this embodiment, parcels can be processed by the system at the rate of one per second, or 3600 per hour. This processing includes image capture, label detection, rotation detection, de-skewing, and OCR or manual extraction of routing information from the label images. In order for all these operations to be completed image capture and label detection should not take longer than 200ms.

Two kinds of problems have been solved to perform such real time label detection at reasonable cost with currently available technology. First, achieving the required speed is very difficult, since transferring image data from the image capture board to the host for processing takes more than 200ms. Second, the image data is not ideal: the label's white color may be contaminated by noise, the label may be somewhat transparent so the parcel background corrupts the white color, and the black colour of the text on the label is not exclusive to the label. Moreover, the label may appear anywhere on the parcel.

The processing of the low resolution parcel image proceeds as follows.

The TV camera 200 generates a 640 x 480 pixel image. Every 10th line in this image is transferred from the video capture card to the computer memory totalling approximately 50ms. This results in a significantly subsampled image, but in reasonable time.

To solve the detection problem, a function has been found that estimates the likelihood of every pixel in the image to be in the label. A one dimensional segmentation algorithm is then employed on each of the two major axes of the image to obtain a clear distinction between the label and the rest of the parcel.

This technique is described in more detail below.

The processing of the subsampled parcel image is shown schematically in Figure 2. First, a classification 400 is carried out. The pixels in the image are classified into three classes: Label, Background and Neither. Each pixel is first classified as one of these, disregarding its neighbours.

(a) Label type pixels: These are the white pixels. It is assumed that although such pixels may occur anywhere on the parcel, they are concentrated in long runs (both horizontally and vertically) in the label area.

(b) Neither type pixels: These are the black pixels. It is assumed that such pixels can occur both in the label area and in the background area, but in the label they do not form many long runs either horizontally, or vertically, or both.

(c) Background type pixels: All the other pixels. It is assumed that the occurrence of such pixels in the label is quite rare.

The classification 400 consists of two stages:

(a) Colour space transformation:
   The original RGB image is transformed to YUV image, where Y is the luminance component and U, V are the chrominance components. The transformation equations are the following:

$$Y = 0.299 * R + 0.587 * G + 0.114 * B$$

$$U = B - Y$$

$$V = R - Y$$

(b) Colour classification:
   In the YUV space gray levels are designated by low values of the chrominance components (U, V). Among these colours, white colors are defined by high values of the luminance component. Y, and black colours by low values.

For each pixel, the chrominance components are first checked. If at least one of them is high, the pixel's colour is not grey and it is classified as Background. If both components have low values the luminance value is checked. If it is high, the pixel's colour is white and it is classified as Label. If it is low, the pixel's colour is black and it is classified as Neither type pixel. Pixels having middle range values of luminance are also classified as Background.

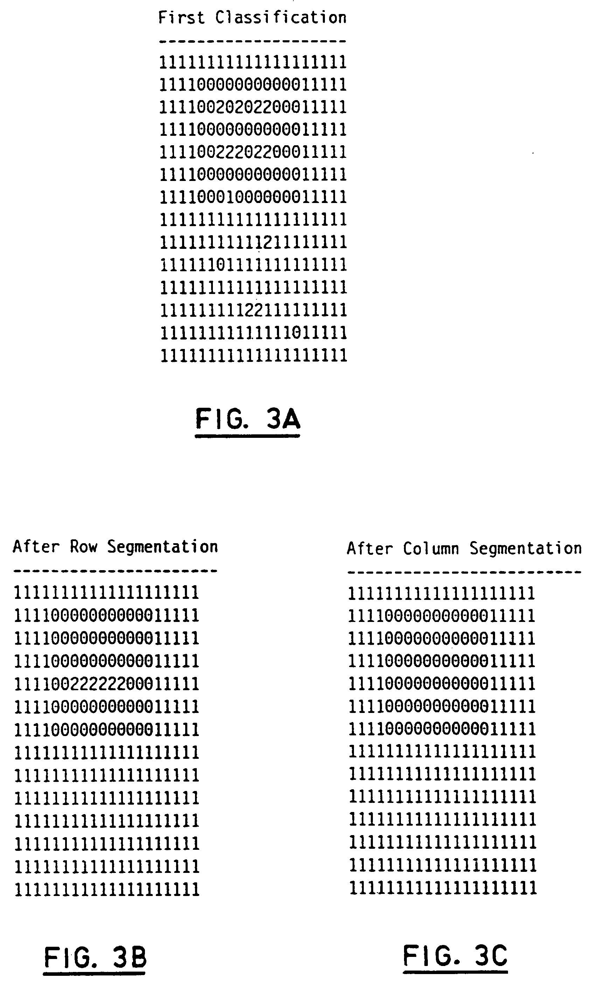

Subsequently, a segmentation process 410 is applied first to each row, and then to each column. This process segments the row/column to Label, Background, or Neither regions, subject to constraints on the region measures. As a result of the segmentation, pixels are reclassified to the categories above, but this time the surrounding context is taken into account. In Figures 3a, 3b, and 3c, 0 designates Label (white pixels), 1 designates Background pixels, and 2 designates Neither type pixels.

Figure 3a shows the pixel classification before segmentation.

Figure 3b shows the classification after row segmentation. Figure 3c shows the classifiaction after column segmentation. In this embodiment, it was assumed that the segmentation constraint is that a run of pixels of any type should be at least three pixels long.

2. Segmentation. The segmentation logic used in the preferred embodiment of this invention is described below.

The algorithm processes an array of symbols A(). Three symbols are used representing two properties of interest (the '1' and '0' symbols) - in this case the background pixels and the white pixels respectively - and a lack of both (the '*' symbol) - in this case the black pixels.

A() is produced by the classification process, which is not 100% correct. The segmentation process relies on the assumption that in the 100% correct classification of pixels the symbols do not occur isolated, but rather in runs.

The segmentation logic scans A(), and maintains three hypotheses as to the type of run that is reflected by A(). Each of these hypotheses has a score, and when the score of a hypothesis is higher than an experimentally determined threshold, that hypothesis is accepted and forms the output. Specifically, each hypothesis has the following variables:

Type:- 0, 1, or *;
Score:- representing the quality of match between the segmentation result and the data in A();
Run_score:- representing the quality of match between the last segmented run and the corresponding elements in A();
Increment:- the increment to the score if the next element in A() matches the hypothesis type;

Start:- the index in A() in which a run of the hypothesis type is assumed to have started;
Prev_len:- the length of the last run of this type.

Let A() be a(0) .. a(n-1). The processing proceeds as follows:

1. Initialize:

score(0) = run_score(0) = increment(0) = start(0) = prev_len(0) = 0;
score(1) = run_score(1) = increment(1) = start(1) = prev_len(1) = 0;
score(*) = run_score(*) = increment(*) = start(*) = prev_len(*) = 0;
current_state = 2;

2. Loop on steps 3 to 7 for all A() elements:

for i in (0..n-1)

3. Score buildup and previous length maintenance:

for each hypothesis x in (0 1 *)

```
if  (a(i) matches x)
(
if  (increment(x) == 0)  prev_len(x) = 0;
increment(x) = increment(x)+1;
score(x)     = score(x)+increment(x);
run_score(x) = run_score(x)+increment(x);
}
else
(
if  (increment(x) != 0)  prev_len(x) = increment(x);
increment(x) = 0;
}
```

4. Starting point update

for each hypothesis x in (0 1 *)
if (a(i) matches x and start(x) < 0) start(x) = i;

5. Hypothesis acceptance

```
y = MaxArg( score(x), x in (0 1 *) }
if  (run_score(y) > threshold(y))
        ( _
```

```
current_state = y;
for j=start(y); while j<=i; j=j+1
a(j) = y;
break;
}
```

6. Normalization

```
if (current_state != * && a(i) != *)
    increment(*) = increment(1-current_state);
    if (run_score(current_state) > threshold(current_state))
    run_score(0) = run_score(1) = run_score(*) = 0;
```

7. Score Tracking

```
for x in (0 1 *)
if (increment(x) == 0 && score(x) < score(current_state))
    (
    score(x) = score(current_state);
    run_score(x) = 0;
    start(x) = -1;
    }
```

8. End of Loop

The term 'a(i) matches x' in the above algorithm includes the case where a(i) = * and also the case where a(i) != current_state, and increment (a(i)) < prev_len(x) for x != a(i).

It will be understood that it is possible to subsample the image in many ways other than at every tenth line as in this embodiment. It is also possible to vary the sampling density according to observed Label type pixels: a high sampling density in the vicinity of such pixels, low density elsewhere.

A by-product of the label detection analysis is the identification of the featureless areas on the parcel top surface, one of which is reported as the open area for application of the label.

The package next passes through a stage in which high resolution (200 DPI grey scale) images of the label areas are captured, using standard 2048 element line scanners 220. Since the field of view for a single line scanner is approximately 10 inches (2048/200 DPI), two alternatives providing coverage of the overall package width are possible.

(a) Three line scan cameras, each covering 1/3 of the belt width, with slightly overlapped fields of view, and each with its own lens. With this arrangement, the number of "candidate" labels is not limited by the scanner configuration. This configuration, however, requires a software "stitching" operation to be performed on label images which are split across two scanners.

7

(b) Multiple line scan cameras which pivot to look at a 10 inch area containing candidate labels. Two cameras guarantee that images from any two candidate labels can be captured regardless of label location. Additional candidate labels within the same 10 inch swathes can also be covered. Pivoting the cameras introduces some predictable image distortion that software must compensate for.

With either approach, a motor-driven focus adjustment is provided for the camera lens, to compensate for different package heights.

Illumination for the line cameras is provided as a continuous strip of light 230 across the belt.

The 200 DPI 4-bit grey scale image for each label is passed to the OCR Subsystem 120 from the appropriate scanners based on knowledge of the positions of the labels obtained from the low resolution images.

The high resolution label images are processed by OCR subsystem 120 in a known manner to extract routing information from the text printed on the labels.

Finally, the routing information can be forwarded to an application that will apply a label with a mechanism further downstream on the conveyor system.

Industrial Applicability

The invention can be applied to the field of computerized parcel sorting apparatus including image processing apparatus for identifying and locating labels on digitized images of parcels.

**Claims**

1.   , Image processing apparatus for locating labels on images of parcels comprising:

    means (240) to generate and store in digital form an image of the parcel, the image comprising pixels arranged in rows and columns;

    classification logic (400) for classifying each pixel as either a label pixel, a background pixel or neither, based on the pixel colour;

    segmentation logic (410) for reclassifying each pixel as either label or background based on its original classification and the classification of pixels in its neighbourhood; and

    means for identifying label regions in the image from the reclassification of the pixels.

2.   Image processing apparatus as claimed in claim 1 wherein the segmentation logic is arranged to identify runs of pixels in a linear array of pixels which should have the same classification, to determine whether all pixels in the run should be classified as label pixels or background pixels based on the classifications of the pixels therein and to reclassify the pixels in the run not classified as label pixels or background pixels accordingly.

3.   Image processing apparatus as claimed in claim 2 wherein the segmentation logic (410) is arranged to process the image row by row and then column by column or vice versa.

4.   Image processing apparatus as claimed in any preceding claim wherein the classification logic (400) is arranged to classify white pixels as label pixels, black pixels as neither label pixels nor background pixels and all other pixels as background pixels.

5.   Image processing apparatus as claimed in any preceding claim comprising a camera (200) for capturing the image.

6.   Image processing apparatus as claimed in claim 5 comprising means to subsample the image captured by the camera.

7.   Apparatus for extracting routing information from parcels for subsequent use in sorting the parcels, comprising a camera (200) for capturing parcel images; means (100) to transport parcels past the camera; image processing apparatus as claimed in any preceding claim for receiving a signal from the camera; means (220) to generate images of parcel labels using the locations of the regions in which all pixels are classified as label pixels; and means to extract routing information from the images of the labels.

8. Image processing method for locating labels on images of parcels comprising:

(a) generating and storing in digital form an image of the parcel comprising pixels arranged in rows and columns;
(b) classifying each pixel as either a label pixel, a background pixel or neither, based on the pixel colour;
(c) reclassifying each pixel as either label or background based on its original classification and the classification of pixels in its neighbourhood; and
(d) identifying label regions in the image based on the reclassification of the pixels.

9. Method for parcel sorting comprising transporting parcels past a camera; locating a label on an image of the parcel using a method as claimed in claim 8; generating images of parcel labels using the locations of the label regions; extracting routing information from the images of the labels; and sorting the parcels using the routing information.

**Patentansprüche**

1. Bildverarbeitungsvorrichtung zur Lokalisierung von Aufklebern auf Bildern von Paketen, die Folgendes umfasst:

ein Mittel (240), um ein Bild des Pakets in digitaler Form zu erzeugen und zu speichern, wobei das Bild Pixel umfasst, die in Zeilen und Spalten angeordnet sind;

eine Klassifizierungslogik (400), um jedes Pixel auf der Grundlage seiner Farbe entweder als Aufkleberpixel, als Hintergrundpixel oder als keines von beiden zu klassifizieren;

eine Segmentierungslogik (410), um jedes Pixel auf der Grundlage seiner ursprünglichen Klassifizierung und der Klassifizierung von Pixeln in seiner Nachbarschaft erneut entweder als Aufkleberpixel oder als Hintergrundpixel zu klassifizieren; und

ein Mittel, um anhand der erneuten Klassifizierung der Pixel Aufkleberbereiche in dem Bild zu erkennen.

2. Bildverarbeitungsvorrichtung nach Anspruch 1, wobei die Segmentierungslogik so ausgelegt ist, dass sie Sequenzen von Pixeln in einer linearen Pixelmatrix erkennt, welche dieselbe Klassifizierung aufweisen sollen, um festzustellen, ob alle Pixel in der Sequenz auf der Grundlage der Klassifizierungen der darin befindlichen Pixel als Aufkleberpixel oder als Hintergrundpixel klassifiziert werden sollen und um die Pixel in der Sequenz, die nicht als Aufkleberpixel oder als Hintergrundpixel klassifiziert werden, entsprechend erneut zu klassifizieren.

3. Bildverarbeitungsvorrichtung nach Anspruch 2, wobei die Segmentierungslogik (410) so ausgelegt ist, dass sie das Bild zeilenweise und dann spaltenweise oder umgekehrt verarbeitet.

4. Bildverarbeitungsvorrichtung nach einem der vorhergehenden Ansprüche, wobei die Klassifizierungslogik (400) so ausgelegt ist, dass sie weiße Pixel als Aufkleberpixel, schwarze Pixel weder als Aufkleberpixel noch als Hintergrundpixel und alle anderen Pixel als Hintergrundpixel klassifiziert.

5. Bildverarbeitungsvorrichtung nach einem der vorhergehenden Ansprüche, die eine Kamera (200) zur Erfassung des Bildes umfasst.

6. Bildverarbeitungsvorrichtung nach Anspruch 5, die ein Mittel umfasst, um das von der Kamera erfasste Bild unterabzutasten.

7. Vorrichtung zur Entnahme von Leitweginformationen aus Paketen, um sie später beim Sortieren der Pakete zu verwenden, die Folgendes umfasst: eine Kamera (200) zur Erfassung von Paketbildern; ein Mittel (100), um die Pakete an der Kamera vorbei zuführen; eine Bildverarbeitungsvorrichtung nach einem der vorhergehenden Ansprüche, um ein Signal von der Kamera zu empfangen; ein Mittel (220), um Bilder von Paketaufklebern zu erzeugen, wobei die Positionen der Bereiche verwendet werden, in denen alle Pixel als Aufkleberpixel klassifiziert sind; und ein Mittel, um den Bildern der Aufkleber Leitweginformationen zu entnehmen.

8. Bildverarbeitungsverfahren zur Lokalisierung von Aufklebern auf Bildern von Paketen, das Folgendes umfasst:

(a) Erzeugen und Speichern eines Bildes des Pakets in digitaler Form, das Pixel umfasst, die in Zeilen und Spalten angeordnet sind;

(b) Klassifizieren eines jeden Pixels auf der Grundlage seiner Farbe entweder als Aufkleberpixel, als Hintergrundpixel oder als keines von beiden;

(c) auf der Grundlage seiner ursprünglichen Klassifizierung und der Klassifizierung von Pixeln in seiner Nachbarschaft erneutes Klassifizieren eines jeden Pixels entweder als Aufkleberpixel oder als Hintergrundpixel; und

(d) auf der Grundlage der erneuten Klassifizierung der Pixel Erkennen von Aufkleberbereichen in dem Bild.

9. Verfahren zum Sortieren von Paketen, das Folgendes umfasst: Vorbeiführen der Pakete an einer Kamera; Lokalisieren eines Aufklebers auf einem Bild des Pakets unter Anwendung eines Verfahrens nach Anspruch 8; Erzeugen von Bildern von Paketaufklebern unter Verwendung der Positionen der Aufkleberbereiche; Entnehmen von Leitweginformationen aus den Bildern der Aufkleber; und Sortieren der Pakete unter Verwendung der Leitweginformationen.

## Revendications

1. Dispositif de traitement d'image destiné à localiser des étiquettes sur des images de colis, comprenant :

des moyens (240) destinés à générer et stocker sous forme analogique une image du colis, l'image comprenant des pixels agencés en lignes et en colonnes;

une logique de classification (400) destinée à classifier chaque pixel comme étant soit un pixel d'étiquette, un pixel d'arrière-plan, ou ni l'un ni l'autre, en se basant sur la couleur du pixel;

une logique de segmentation (410) destinée reclassifier chaque pixel comme étant soit un pixel d'étiquette soit un un pixel d'arrière-plan en se basant sur sa classification d'origine et la classification des pixels dans leur voisinage; et

des moyens pour identifier des zones d'étiquette dans l'image, à partir de la reclassification des pixels.

2. Dispositif de traitement d'image selon la revendication 1, dans lequel la logique de segmentation est agencée pour identifier des séries de pixels en un agencement linéaire de pixels qui devraient avoir la même classification, pour déterminer si tous les pixels se trouvant dans la série devraient être classés comme étant des pixels d'étiquette ou des pixels d'arrière-plan, en se basant sur les classifications des pixels s'y trouvant, et pour reclassifier les pixels se trouvant dans la série, n'ayant pas été classifiés, comme des pixels d'étiquette ou des pixels d'arrière-plan, de manière correspondante.

3. Dispositif de traitement d'image selon la revendication 2, dans lequel la logique de segmentation (410) est agencée pour traiter l'image ligne par ligne et, ensuite, colonne par colonne, ou vice-versa.

4. Dispositif de traitement d'image selon l'une quelconque des revendications précédentes, dans lequel la logique de classification (400) est agencée pour classifier des pixels blancs comme étant des pixels d'étiquette, des pixels noirs comme étant ni des pixels d'étiquette, ni des pixels d'arrière-plan, et la totalité des autres pixels comme des pixels d'arrière-plan.

5. Dispositif de traitement d'image selon l'une quelconque des revendications précédentes, comprenant une caméra (200) destinée à capturer l'image.

6. Dispositif de traitement d'image selon la revendication 5, comprenant des moyens pour sous-échantillonner l'image ayant été capturée par la caméra.

7. Dispositif pour extraire une information d'acheminement de colis en vue d'une utilisation subséquente pour trier les colis, comprenant une caméra (200) destinée à capturer les images de colis; des moyens (100) pour transporter des colis devant la caméra; un dispositif de traitement d'image telle que revendiquée selon l'une quelconque des revendications précédentes pour recevoir un signal venant de la caméra; des moyens (220) destinés à générer des images des étiquettes de colis par utilisation des emplacements des zones dans lesquelles la totalité des pixels sont classés comme étant des pixels d'étiquette, et des moyens destinés à extraire une information d'acheminement à partir des images des étiquettes.

8. Procédé de traitement d'image destiné à localiser des étiquettes sur des images de colis, comprenant les étapes consistant à :

   (a) générer et stocker sous forme numérique une image du colis comprenant des pixels agencés en lignes et en colonnes;

   (b) classifier chaque pixel comme étant soit un pixel d'étiquette, un pixel d'arrière-plan ou ni l'un ni l'autre, en se basant sur la couleur du pixel;

   (c) reclassifier chaque pixel comme étant soit un pixel d'étiquette, soit un pixel d'arrière-plan, en se basant sur sa classification d'origine et la classification des pixels à son voisinage; et

   (d) identifier les zones d'étiquette dans l'image en se basant sur la reclassification des pixels.

9. Procédé de tri de colis, comprenant le transport des colis pour les faire passer devant une caméra; la localisation d'une étiquette sur une image du colis par utilisation d'un procédé tel que revendiqué à la revendication 8; la génération d'images d'étiquettes du colis par utilisation des localisations des zones à étiquettes; l'extraction d'une information d'acheminement à partir des images des étiquettes; et le tri des colis par utilisation de l'information d'acheminement.

FIG. 1

FIG. 2

First Classification
--------------------
```
11111111111111111111
11110000000000011111
11110020202200011111
11110000000000011111
11110022202200011111
11110000000000011111
11110001000000011111
11111111111111111111
11111111111211111111
11111101111111111111
11111111111111111111
11111111122111111111
11111111111110011111
11111111111111111111
```

# FIG. 3A

After Row Segmentation
----------------------
```
11111111111111111111
11110000000000011111
11110000000000011111
11110000000000011111
11110022222200011111
11110000000000011111
11110000000000011111
11111111111111111111
11111111111111111111
11111111111111111111
11111111111111111111
11111111111111111111
11111111111111111111
11111111111111111111
```

# FIG. 3B

After Column Segmentation
-------------------------
```
11111111111111111111
11110000000000011111
11110000000000011111
11110000000000011111
11110000000000011111
11110000000000011111
11110000000000011111
11111111111111111111
11111111111111111111
11111111111111111111
11111111111111111111
11111111111111111111
11111111111111111111
11111111111111111111
```

# FIG. 3C